# EUROPÄISCHE PATENTSCHRIFT

(11) **EP 0 946 791 B1**
(45) Veröffentlichungstag und Bekanntmachung des Hinweises auf die Patenterteilung: **11.04.2001**
(21) Anmeldenummer: 97948854.1
(22) Anmeldetag: 31.10.1997
(51) Int. Cl.: C25B 9/00, H01M 4/86

(54) **ELEKTROCHEMISCHE GASDIFFUSIONSHALBZELLE**
ELECTROCHEMICAL GASEOUS DIFFUSION HALF CELL
DEMI-CELLULE ELECTROCHIMIQUE A DIFFUSION GAZEUSE

(30) Priorität: 13.11.1996 DE 19646950
(43) Veröffentlichungstag der Anmeldung: 06.10.1999
(73) Patentinhaber: BAYER AG, 51368 Leverkusen (DE)
(72) Erfinder: GESTERMANN, Fritz, D-51377 Leverkusen (DE); PINTER, Hans-Dieter, D-42929 Wermelskirchen (DE); CAMPHAUSEN, Jens, D-51373 Leverkusen (DE)
(86) Internationale Anmeldenummer: EP9706030
(87) Internationale Veröffentlichungsnummer: WO9821384

(56) Entgegenhaltungen:
- EP-A- 0 104 137
- DE-C- 19 622 744

## Beschreibung

Der Einsatz von Gasdiffusionselektroden in druckkompensierten elektrochemischen Zellen erfordert bei größerer Bauhöhe eine Unterteilung des Gasraums in übereinander liegende Segmente, sogenannte Gastaschen, die im jeweiligen Randbereich mit der Elektrode elektrisch kontaktiert und gasdicht abgeschlossen werden müssen. Eine Halbzelle, die einen solchen grundsätzlichen Aufbau zeigt, ist beispielsweise beschrieben in der deutschen Offenlegungsschrift DE 44 44 114 A1. Ein Nachteil der in DE 44 44 114 gezeigten Konstruktionsweise ist die vergleichsweise umständliche Kontaktierung und Abdichtung der Gasdiffusionselektrode. Es ist gewünscht, die Elektrode mit der Gastasche auf möglichst schmalem Raum zu kontaktieren und abzudichten, um die bezüglich der Elektrodenreaktion inaktive Fläche der Elektrode möglichst gering zu halten.

Aufgabe der Erfindung ist es, eine elektrochemische Gasdiffusionshalbzelle bereitzustellen, die eine möglichst weitgehende Ausnutzung der aktiven Elektrodenfläche ermöglicht, wobei die Elektrode zusammen mit der Gastasche gegebenenfalls modulweise herausnehmbar gestaltet ist, so daß eine in den Randkontakten gasdichte Vormontage der Elektrode auf der Gastasche ermöglicht wird, und die elektrische Kontaktierung für den Betrieb der Gasdiffusionselektrode in der Halbzelle vereinfacht ist.

Eine weitere Aufgabe der Erfindung ist insbesondere die Halbzelle und das Elektroden- und Gastaschenmodul so zu gestalten, daß Module der Halbzelle auch gegen eine konventionelle Elektrode, beispielsweise eine Wasserstoff produzierende Nickelelektrode in einfacher Form ausgetauscht werden können.

Die Aufgabe wird erfindungsgemäß dadurch gelöst, daß die mit Gasdiffusionselektroden bestückten Gastaschen gegebenenfalls auch einzeln aus der Halbzelle herausnehmbar und von ihrer Gasversorgung bzw. Druckkompensation sowie von den elektrischen Anschlüssen lösbar gestaltet sind. Dabei werden die Gastaschen als kompakte flache Elemente gefertigt, deren Vorderseite durch die Gasdiffusionselektrode so abgeschlossen wird, daß beim Einbau der Elektrode in die Halbzelle kein Elektrolyt in den Gasraum bzw. kein Gas in Gegenrichtung aus der Gastasche austritt.

Gegenstand der Erfindung ist eine elektrochemische Halbzelle auf Basis einer Gasdiffusionselektrode als Kathode oder Anode mit einem Gasraum für die Gasdiffusionselektrode, der aus einer oder mehreren Gastaschen gebildet wird, mit einer Ionenaustauschermembran, einer Haltestruktur zur Montage der Elektrode, elektrischen Anschlüssen für die Elektrode, einer Gaszuführung zur Gastasche und einer druckkompensierenden Gasabführung zur Gastasche, einer Elektrolytzuleitung und einer Elektrolytableitung sowie einem Gehäuse zur Aufnahme der Zellenbestandteile, die dadurch gekennzeichnet ist, daß die Gasdiffusionselektrode mit der Gastasche zu einem Modul verbunden ist, das auf der Haltestruktur lösbar befestigt ist, wobei die Gaszuführung und die Gasabführung eine lösbare Verbindung mit der Gastasche bilden.

In einer bevorzugten Ausführungsform ist der Gasraum in mehrere gegebenenfalls unabhängig voneinander mit Elektrodengas bespeisten Gastaschen aufgeteilt, die gegebenenfalls gegenüber dem vor der Gasdiffusionselektrode befindlichen Elektrolytraum druckkompensiert sind.

Besonders bevorzugt ist eine Halbzelle, bei der die im Falle von mehreren Gastaschenmodulen die einzelnen Module unabhängig voneinander an der Haltestruktur lösbar befestigt sind.

Besonders bevorzugt sind auch Ausführungsformen, bei denen die Gasdiffusionselektroden leicht lösbar an der Gastasche befestigt sind um einen Austausch gealterter Elektroden zu ermöglichen.

Vorzugsweise wird die Gaszuführung bzw. die Gasabführung als flexible Schlauchverbindung ausgeführt, mit der die Gastasche verbunden ist, die nach Lösen der Ionenaustauschermembran eine Abnahme der Gastaschen erleichtert.

Alternativ ist es auch insbesondere möglich als Überwurfdichtung gefertigte über als Blasenkanäle ausgeführte Gaszuführungen und entsprechend druckkompensierende Tauchungen einzusetzen.

In einer weiteren bevorzugten Form der erfindungsgemäßen Halbzelle werden die Gastaschenmodule mit Hilfe von Strukturelementen in der Halbzelle positioniert, elektrisch mit der externen Stromversorgung verbunden und gegebenenfalls soweit abgedichtet, daß Elektrolyt aus dem durchströmten Elektrolytspalt nicht unkontrolliert in den rückwärtigen druckkompensierten Raum der Gastasche überströmen kann, wobei die Strukturelemente die Gastaschenmodule so positionieren, daß die Gasdiffusionselektroden gleichzeitig als Elektrolytspalt für den Durchgang des Elektrolyten in den Elektrolytraum zwischen der Gasdiffusionselektrode und der Ionenaustauschermembran dienen können.

Die elektrische Kontaktierung der Gastaschenmodule mit einer externen z.B. an das Halbzellengehäuse angeschlossenen elektrischen Stromquelle kann dadurch verbessert werden, daß die Module zusätzlich zu den Preßkontakten im Randbereich mit Hilfe einer Unterstruktur, die z.B. mit dem Halbzellengehäuse verpreßt ist von ihrer Rückseite, der Gasdiffusionselektrode abgewandten Seite, über elastische und elektrisch leitende Kontaktelemente (z.B. Federkontakte) elektrisch kontaktiert sind.

Durch den elektrischen Kontakt im Randbereich und den über die Fläche der Elektrode verteilten Kontakt der Elektrode wird eine niederohmige elektrische Stromzuführung zur Elektrode ermöglicht.

In einer weiteren bevorzugten Variante der erfindungsgemäßen Halbzelle ist die Gasdiffusionselektrode auf ihrer zum Gasraum der Gastasche gewandten Seite mit Hilfe eines Stützgitters auf ihrer Fläche elektrisch kontaktiert. Das Stützgitter hat dabei elaktrischen Kontakt mit der Gastaschenrückwand.

Eine eventuelle zusätzliche Rinne, die sich am unteren Rand zwischen Gasdiffusionselektrode und Gastasche bildet, kann zur Aufnahme gegebenenfalls anfallenden Kondensats dienen. Das Kondensat kann zusammen mit dem Überschußgas über die am tiefsten Punkt liegende Gasabführung in den rückwärtigen Elektrolytraum ausgeschleust werden.

Eine Inhomogenität in der Versorgung des vor der Gasdiffusionselektrode liegenden Elektrolytraums mit frischem Elektrolyt kann in einer bevorzugten Variante dadurch vermieden werden, daß die Halbzelle hinter der Elektrolytzuleitung einen zusätzlichen Elektrolytverteiler aufweist, der den Elektrolytstrom über die Breite der Halbzelle vergleichmäßigt. Der druckkompensierende Rückraum wird bei dieser Ausführung gegebenenfalls nicht durchströmt. Der Rückraum steht mit dem Elektrolytstrom nur am oberen Ende der Halbzelle in Verbindung.

Ein besonderer Vorteil der Aufbauweise der Halbzelle gemäß der Erfindung ist die Möglichkeit, die Halbzelle auch bei Austausch der Gastaschenmodule einfach mit konventionellen Elektroden, insbesondere mit Wasserstoff produzierenden Elektroden, z.B. Nickelelektroden zu betreiben. In einer bevorzugten Variante sind daher die Gastaschenmodule gegen konventionelle Elektroden austauschbar gestaltet, wobei die Gaszuleitung zur Gastasche gegebenenfalls absperrbar oder demontierbar ist.

Gegenstand der Erfindung ist ebenfalls die Verwendung der elektrochemischen Halbzelle gemäß der Erfindung in einer elektrochemischen Zelle, insbesondere einer Elektrolysezelle, zum wahlweisen Betrieb mit Gastaschenmodulen oder mit konventionellen Elektroden, insbesondere mit Wasserstoff produzierende Elektrode, vor allem aktivierte Nickelelektroden.

Die Erfindung wird nachstehend anhand der Figuren näher erläutert. In den Figuren zeigen

Figur 1 einen Querschnitt durch eine erfindungsgemäße Halbzelle in der Blickrichtung von der Ionenaustauschermembran auf die Gasdiffusionselektroden und die dazwischen liegenden Halterungen der Gastaschen.

Figur 2 einen durchbrochenen Längsschnitt bei geschlossener Halbzelle entsprechend der Linie A-A' in Figur 1.

Figur 3 einen durchbrochenen Längsschnitt entsprechend der Linie A-A' in Figur 1 bei geöffneter Halbzelle mit der vom Zellengehäuse gelösten Ionenaustauschermembran und Gastaschenmodul.

Figur 4 ein Detail aus Figur 2 zur Erläuterung der elektrischen Kontaktierung der Gastasche.

Figur 5a einen Querschnitt entsprechend der Linie B-B' mit Blick auf die Gaszuführung 21 der Halbzelle.

Figur 5b einen teilweisen Ausschnitt entsprechend der Linie C-C' im oberen Teil der Halbzelle nach Figur 1.

Figur 6 einen teilweisen Querschnitt entsprechend der Linie D-D' in Figur 1 durch eine Halbzelle, bei der die Gastaschenmodule durch eine konventionelle Nickelelektrode 30 mit der Tragestruktur 31 ersetzt sind.

Figur 7 einem Längsschnitt entsprechend der Linie A-A' gemäß Figur 1 zu der Variante der Halbzelle nach Figur 6 im Betrieb mit einer Nickelelektrode 30.

### Beispiele

### Beispiel 1

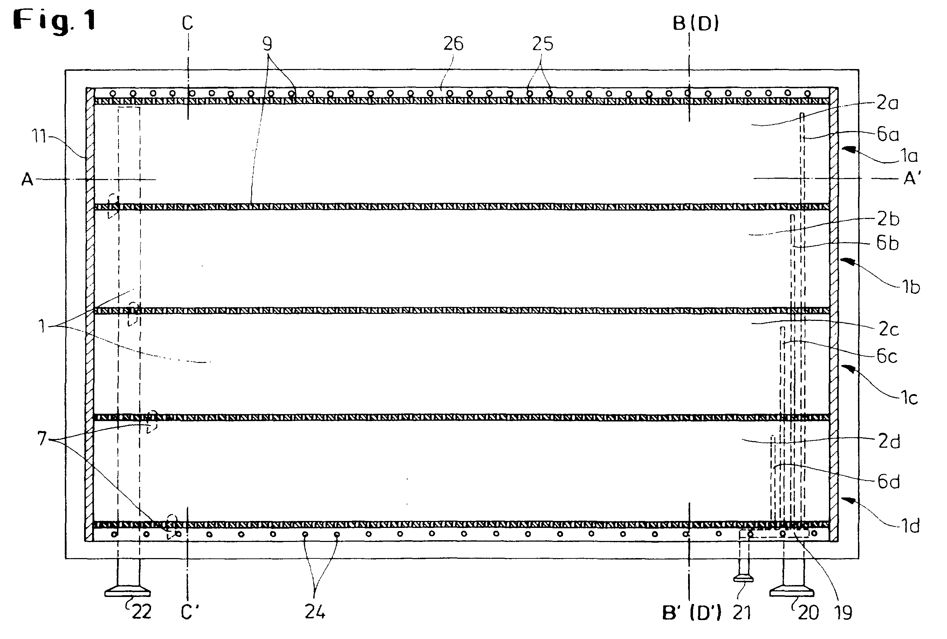

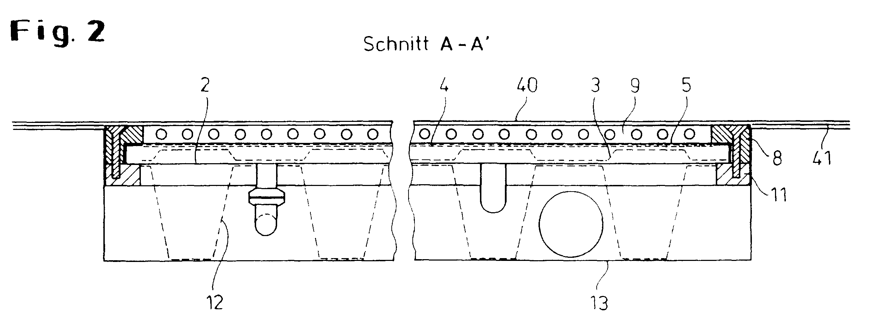

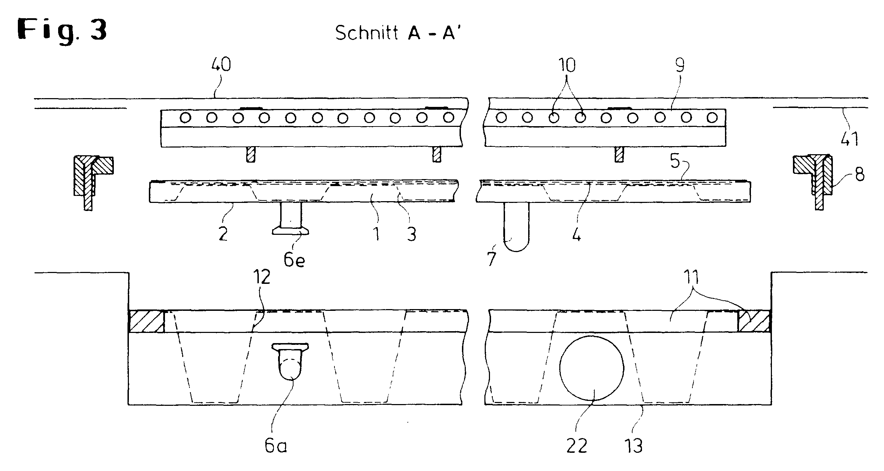

Eine elektrochemische Halbzelle wird wie folgt aufgebaut:
In einem halbschaligen elektrolytfesten Gehäuse 13 (siehe Fig. 3) ist eine Rahmenstruktur 11 sowie eine Unterstruktur 12, die mit einer externen Stromzuführung (nicht gezeichnet) verbunden ist, fest verankert. In das Gehäuse durchgeführt sind eine Gasleitung 21 (siehe Fig. 1), eine Elektrolytzuleitung 20 sowie eine kombinierte Elektrolyt- und Gasableitung 22. Auf der Haltestruktur 11 werden mit Hilfe von vertikalen Klemmleisten 8 und horizontalen Klemmleisten 9 die Gastascheneinheit 1 mit der Gasdiffusionselektrode 5 im Gehäuse 13 befestigt. Die Halbzelle wird abgeschlosen durch die Membrane 40, die auf dem umlaufenden Rand des Gehäuses 13 über eine Dichtung 41 anliegt (siehe Fig. 2) und z.B. durch Anflanschen einer weiteren nicht gezeigten Halbzelle elektrolytdicht auf den umlaufenden Rand des Gehäuses 1 gepresst wird. Die von dem Gasverteiler ausgehenden biegsamen Leitungen 6a, 6b, 6c, 6d (siehe Fig. 1) werden über Flanschverbindungen mit jeweiligen Stützen 6e an der Gastascheneinheit verbunden.

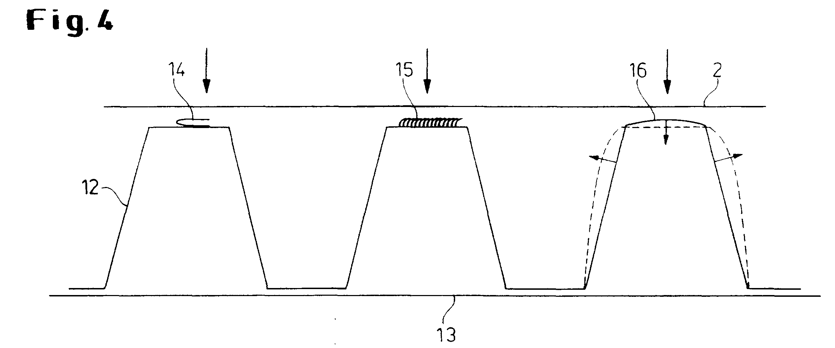

Die Ausführung nach Figur 1 zeigt eine Aufteilung in vier Gastaschen 2a, 2b, 2c, 2d mit jeweiliger Druckompensation über Gasüberströmleitungen 7. Die Gastasche 1 besteht aus dem metallischen Gehäuse 2, das über Stromkontakte, z.B. Federkontakte 14, Bürstenkontakte 15 oder direkten Kontakt mit der stromführenden Unterstruktur 12 an vorgewölbten Strukturteilen 16 (siehe Details in Fig. 4) verbunden ist. Die weitere Stromzufuhr erfolgt über die metallischen Prozeßkontakte zwischen den Klemmleisten 8, 9 und der Haltestruktur 11 über die Randbereiche des Gehäuses 2. Der Kontaktwiderstand kann durch Oberflächenvergütung, z.B. durch Vergoldung, verringert werden. Die Gastascheneinheit 1 weist weiter Zu- und Ableitungen 6e und 7 für das Elektrodengas, eine Stützstruktur 3 zur Stützung der Gasdiffusionselektrode 5 sowie ein Elektrodenauflagegitter 4 auf, auf dem die Gasdiffusionselektrode 5 ganzflächig aufliegt. Jede der vier Gastaschen 1a, 1b, 1c, 1d weist eine im Randbereich des Gastaschenmoduls gasdicht verbunden Gasdiffusionselektrode 5 auf, die hier gleichzeitig elektrisch verbunden wird. Bei Gasdiffusionselektroden mit leitfähiger Rückseite erfolgt eine vollständige elektrische Kontaktierung über das Elektrodenauflagegitter.

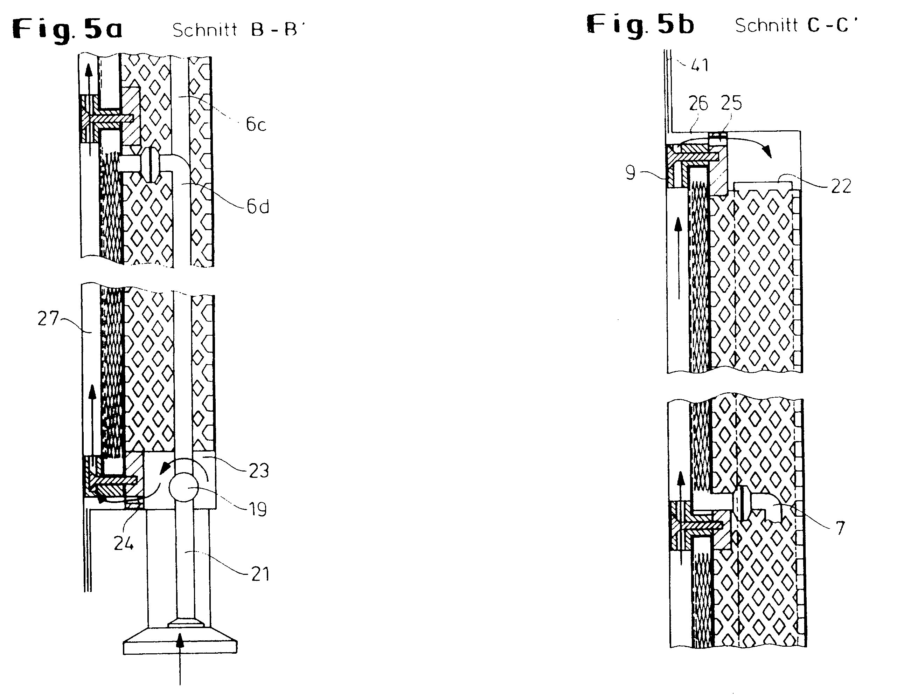

Im Betrieb tritt, wie in Figur 5a gezeigt, der Elektrolyt von der Elektrolytzuleitung 20 durch den Elektrolytverteiler 23 über Bohrungen 24 und weitere Bohrungen 10 in den horizontalen Klemmleisten in den Elektrolytraum 27 vor der Gasdiffusionselektrode 5 ein. Der Elektrolyt durchströmt den Elektrolytraum 27 entlang der vier Gastaschenmodule la bis 1d und strömt durch Bohrungen in der obersten horizontalen Klemmleiste 9 in den Elektrolytsammelkanal 26 ein. Von dort fließt der Elektrolyt über Bohrungen 25 in den rückwärtigen Raum hinter der Gasdiffusionselektrode ab und wird über ein Fallrohr 22 zusammen mit überschüssigem Elektrodengas aus der Halbzelle abgeführt (siehe Fig. 5b). Die Halbzelle ist im Betrieb als Elektrolysezelle vorderseitig mit einer Ionenaustauschermembran 40 geschlossen, die für einen Durchtritt der Ionen entsprechend der jeweiligen Elektrolysereaktion von der erfindungsgemäßen Halbzelle zu einer weiteren angeschlossenen Halbzelle oder gegebenenfalls in umgekehrter Richtung sorgt.

Das Elektrodengas tritt an der Zuleitung 21 in die Halbzelle ein und wird über einen Gasverteiler 19 auf die zur besseren Gasverteilung in die einzelnen Gastaschenmodule angedrosselten Zuleitungen 6a, 6b, 6c und 6d zu den vier Gastaschenmodulen la, 1b, 1c, ld (siehe Fig. 1) verteilt. Das Elektrodengas durchströmt die Gastaschen in Längsrichtung und der unverbrauchte Überschuß sowie eventuell angefallenes Kondensat tritt am entgegengesetzten Ende durch Gasüberströmstutzen 7 aus den Gastaschen zum Elektrolyten im Elektrolytspalt aus. Hierdurch wird eine Druckkompensation erreicht. Von den Gasüberströmleitungen 7 perlt das Gas durch den hinter den Gastaschenmodulen befindlichen Raum nach oben und sammelt sich im Raum über dem Ende des Anschlußes 22. Von dort wird das Gas durch das Fallrohr 22 aus der Halbzelle abgeleitet.

### Beispiel 2

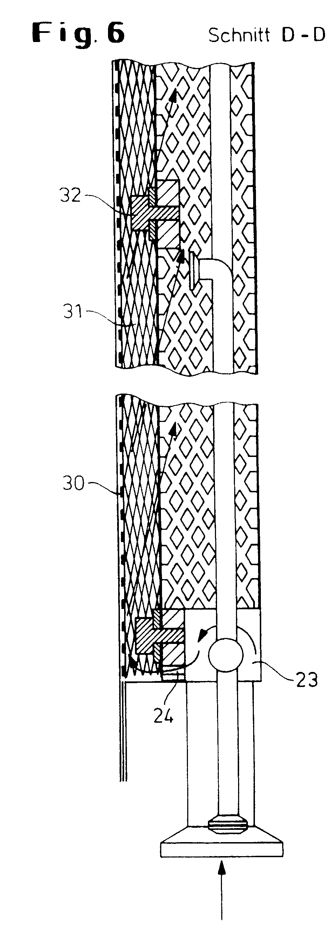

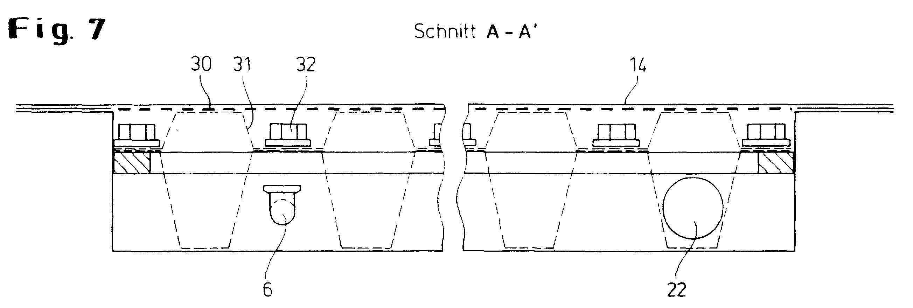

Für den Betrieb mit einer konventionellen Elektrode können die Gastaschenmodule 1a bis 1d zusammen mit den Klemmleisten 8 und 9 wie in Fig. 3 angedeutet demontiert werden und durch eine Nickelkathode 30 mit einer Unterstruktur 31, die als Stromzuleitung und Stütze dient, ersetzt werden. Die Gaszuführungen 6a bis 6d werden sinnvollerweise geschlossen. Die konventionelle Elektrode, z.B. eine aktivierte Nickelkathode ist mit Schraubverbindungen 32 an der Rahmenstruktur 11 der Halbzelle befestigt (siehe Fig. 6 und 7). Die Ableitung des bei der Elektrodenreaktion gebildeten Wasserstoffs kann zusammen mit abfließendem Elektrolyt über das Fallrohr 22 erfolgen.

## Patentansprüche

1. Elektrochemische Halbzelle auf Basis einer Gasdiffusionselektrode (5) als Kathode oder Anode, mit einem Gasraum für die Gasdiffusionselektrode, der aus einer oder mehreren Gastaschen (2a, 2b, 2c, 2d) gebildet wird, mit einer Ionenaustauschermembran (40), einer Haltestruktur (11), einer Gaszuführung (21) und einer Gasabführung (22), einer Elektrolytzuleitung (20), einer Elektrolytableitung (22) und einem Gehäuse (13), dadurch gekennzeichnet, daß die Gasdiffusionselektrode (5) mit der oder den Gastaschen (1a, 1b, 1c, 1d) zu einem Modul oder mehreren Modulen (1a, 1b, 1c, 1d) verbunden ist, das auf der Haltestruktur (11) lösbar befestigt ist, wobei die Gaszuführung (21) und die Gasabführung (22) eine lösbare Verbindung mit der Gastasche (2a, 2b, 2c, 2d) bilden.

2. Halbzelle nach Anspruch 1, dadurch gekennzeichnet, daß der Gasraum in mehrere gegebenenfalls unabhängig voneinander gasbespeiste Gastaschenmodule (la, 1b, lc, ld) aufgeteilt ist, die gegenüber dem Elektrolytraum (27) druckkompensiert sind.

3. Halbzelle nach den Anspruch 2, dadurch gekennzeichnet, daß die Gastaschenmodule (1a, 1b, 1c, 1d) unabhängig von einander an der Haltestruktur (11) lösbar befestigt sind.

4. Halbzelle nach den Ansprüchen 1 bis 3, dadurch gekennzeichnet, daß die Gaszuführungen (6a, 6b, 6c, 6d) als flexible Schlauchverbindungen mit der Gastasche (2a, 2b, 2c, 2d) ausgebildet sind.

5. Halbzelle nach den Ansprüchen 1 bis 4, dadurch gekennzeichnet, daß die Gastaschenmodule (1a, 1b, 1c, 1d) über Strukturelemente (9) in der Halbzelle positioniert, elektrisch kontaktiert und ggf. strömungsmäßig abgedichtet sind, wobei die Strukturelemente gegebenenfalls gleichzeitig einen aktiv durchströmten Elektrolytspalt bilden.

6. Halbzelle nach den Ansprüchen 1 bis 5, dadurch gekennzeichnet, daß die Gastaschenmodule (1a, 1b, 1c, 1d) mit der Unterstruktur (12) über Kontaktelemente (14, 15, 16) elektrisch kontaktiert sind.

7. Halbzelle nach den Ansprüchen 1 bis 6, dadurch gekennzeichnet, daß die Gasdiffusionselektrode (5) an einem Stützgitter (4) im Innenraum der Gastasche (2a, 2b, 2c, 2d) flächig elektrisch kontaktiert ist.

8. Halbzelle nach den Ansprüchen 1 bis 7, dadurch gekennzeichnet, daß die Zelle einen Elektrolytverteiler (23) zur homogenen Versorgung des Elektrolytraumes (27) mit Elektrolyt aufweist.

9. Halbzelle nach den Ansprüchen 1 bis 8, dadurch gekennzeichnet, daß die Gastaschenmodule (1a, 1b, 1c, 1d) austauschbar sind gegen konventionelle Elektroden (30)

10. Halbzelle nach den Ansprüchen 1 bis 9 dadurch gekennzeichnet, daß die Gasdiffusionselektrode (5) mit den Modulen 1a bis 1d lösbar verbinden ist.

11. Verwendung der Halbzelle gemäß einem der Ansprüche 1 bis 10 in einer elektrochemischen Zelle zum wahlweisen Betrieb mit den Gastaschenmodulen (1a, 1b, 1c, 1d) oder mit konventionellen Elektroden (30).

## Claims

1. Electrochemical half cell based on a gas diffusion electrode (5) as the cathode or the anode, comprising a gas diffusion electrode gas space formed by one or more gas pockets (2a, 2b, 2c, 2d) and further comprising an ion exchange membrane (40), a retaining element (11), a gas supply (21) and a gas exhaust (22), an electrolyte feeder (20), an electrolyte offtake (22) and a housing (13), characterized in that the gas diffusion electrode (5) is connected to the gas pocket(s) (1a, 1b, 1c, 1d) to form a module or a plurality of modules (1a, 1b, 1c, 1d), which is detachably secured to the retaining element (11), the gas supply (21) and the gas exhaust (22) forming a detachable link to the gas pocket (2a, 2b, 2c, 2d).

2. Half cell according to Claim 1, characterized in that the gas space is partitioned into a plurality of gas pocket modules (1a, 1b, 1c, 1d) which, if required, can be fed with gas independently of one another and which are pressure-compensated with respect to the electrolyte compartment (27).

3. Half cell according to Claim 2, characterized in that the gas pocket modules (1a, 1b, 1c, 1d) are detachably secured, independently of one another, to the retaining element (11).

4. Half cell according to Claims 1 to 3, characterized in that the gas supplies (6a, 6b, 6c, 6d) are designed as flexible hose connections to the gas pocket (2a, 2b, 2c, 2d).

5. Half cell according to Claims 1 to 4, characterized in that the gas pocket modules (1a, 1b, 1c, 1d) are, with the aid of structural elements (9), positioned in the half cell, electrically contacted therein and, if required, sealed in terms of flow, the structural elements at the same time, if required, forming an actively perfused electrolyte gap.

6. Half cell according to Claims 1 to 5, characterized in that the gas pocket modules (1a, 1b, 1c, 1d) are in electrical contact with the substructure (12) via contact elements (14, 15, 16).

7. Half cell according to Claims 1 to 6, characterized in that the gas diffusion electrode (5) is electrically contacted over its area at a support grid (4) in the interior of the gas pocket (2a, 2b, 2c, 2d).

8. Half cell according to Claims 1 to 7, characterized in that the cell includes an electrolyte manifold (23) for homogeneously supplying electrolyte to the electrolyte compartment (27).

9. Half cell according to Claims 1 to 8, characterized in that the gas pocket modules (1a, 1b, 1c, 1d) can be replaced by conventional electrodes (30).

10. Half cell according to Claims 1 to 9, characterized in that the gas diffusion electrode (5) is detachably connected to the modules 1a to 1d.

11. Use of the half cell according to any one of Claims 1 to 10 in an electrochemical cell for operation involving the optional use of gas pocket modules (1a, 1b, 1c, 1d) or of conventional electrodes (30).

## Revendications

1. Demi-cellule électrochimique à base d'une électrode à diffusion de gaz (5) comme cathode ou comme anode, avec un espace gazeux pour l'électrode à diffusion de gaz, lequel est constitué d'une ou plusieurs poches gazeuses (2a, 2b, 2c, 2d), avec une membrane échangeuse d'ions (40), une structure de support (11), une alimentation en gaz (21) et une évacuation de gaz (22), une alimentation en électrolyte (20), une évacuation d'électrolyte (22) et un boîtier (13), caractérisée en ce que l'électrode à diffusion de gaz (5) est assemblée avec la ou les poches gazeuses (1a, 1b, 1c, 1d) en un module ou en plusieurs modules (1a, 1b, 1c, Id), lequel est fixé de manière amovible sur la structure de support (11), l'alimentation en gaz (21) et l'évacuation de gaz (22) formant un assemblage amovible avec la poche gazeuse (2a, 2b, 2c, 2d).

2. Demi-cellule selon la revendication 1, caractérisée en ce que la poche gazeuse est subdivisée en plusieurs modules de poches gazeuses (1a, 1b, 1c, 1d) alimentés en gaz de manière éventuellement indépendante, lesquels sont équilibrés en pression par rapport à l'espace d'électrolyte (27).

3. Demi-cellule selon la revendication 2, caractérisée en ce que les modules de poches gazeuses (1a, 1b, 1c, 1d) sont fixés de manière amovible indépendamment les uns des autres sur la structure de support (11).

4. Demi-cellule selon les revendications 1 à 3, caractérisée en ce que les alimentations en gaz (6a, 6b, 6c, 6d) sont réalisées dans la forme de liaisons de tuyaux flexibles avec la poche gazeuse (2a, 2b, 2c, 2d).

5. Demi-cellule selon les revendications 1 à 4, caractérisée en ce que les modules de poches gazeuses (1a, 1b, 1c, 1d) sont disposés par l'intermédiaire d'éléments de structure (9) dans la demi-cellule, sont mis en contact électrique et sont éventuellement rendus étanches à l'écoulement, les éléments de structure formant éventuellement simultanément une fente pour l'électrolyte activement parcourue.

6. Demi-cellule selon les revendications 1 à 5, caractérisée en ce que les modules de poches gazeuses (1a, 1b, 1c, 1d) sont mis en contact électrique avec la structure inférieure (12) par l'intermédiaire d'éléments de contact (14, 15, 16).

7. Demi-cellule selon les revendications I à 6, caractérisée en ce que l'électrode à diffusion de gaz (5) est mise en contact électrique en surface superficiellement sur une grille de support (4) dans l'espace interne de la poche gazeuse (2a, 2b, 2c, 2d).

8. Demi-cellule selon les revendications 1 à 7, caractérisée en ce que la cellule présente un distributeur d'électrolyte (23) pour une alimentation homogène de l'espace d'électrolyte (27) en électrolyte.

9. Demi-cellule selon les revendications 1 à 8, caractérisée en ce que les modules de poches gazeuses (1a, 1b, 1c, 1d) peuvent être changés par des électrodes classiques (30).

10. Demi-cellule selon les revendications 1 à 9, caractérisée en ce que l'électrode à diffusion de gaz (5) est liée de manière amovible aux modules la à 1d.

11. Utilisation de la demi-cellule selon l'une quelconque des revendications 1 à 10 dans une cellule électrochimique pour le fonctionnement au choix avec les modules de poches gazeuses (1a, 1b, 1c, 1d) ou avec d'électrodes classiques (30).
